# EUROPÄISCHE PATENTSCHRIFT

(11) **EP 0 931 957 B1**
(45) Veröffentlichungstag und Bekanntmachung des Hinweises auf die Patenterteilung: **02.10.2002**
(21) Anmeldenummer: 98122429.8
(22) Anmeldetag: 26.11.1998
(51) Int. Cl.: F16F 15/36, D06F 37/20

(54) **Vorrichtung zum Auswuchten von rotierenden Körpern**
Device for the balancing of rotating bodies
Dispositif d'équilibrage de corps rotatifs

(30) Priorität: 27.01.1998 DE 19802929
(43) Veröffentlichungstag der Anmeldung: 28.07.1999
(73) Patentinhaber: Miele & Cie. GmbH & Co., D-33332 Gütersloh (DE)
(72) Erfinder: Beier, Christian, 33335 Gütersloh (DE)

(56) Entgegenhaltungen:
- US-A- 4 295 387
- US-A- 4 298 110
- US-A- 4 388 841
- US-A- 5 242 328

## Beschreibung

Die Erfindung betrifft eine Vorrichtung zum Auswuchten von rotierenden Körpern, bestehend aus einer mit dem Körper umlaufenden, konzentrisch zu seiner Rotationsachse angeordneten kreisringförmigen Laufbahn, innerhalb der mindestens zwei Gewichte angeordnet sind.

Aus der EP 0 640 192 B1 ist ein sogenannter Kugelauswuchter bekannt, bei dem innerhalb der Laufbahn Kugeln frei beweglich angeordnet sind. Der Nachteil eines Kugelauswuchters besteht darin, daß er seine kompensatorische Wirkung erst oberhalb der Resonanzfrequenz bzw. kritischen Drehzahl des Systems entfaltet, in dem der rotierende Körper gelagert ist (s. bspw. Kellenberger: Elastisches Wuchten; Springer Verlag; S. 402f). Im unterkritischen Drehzahlbereich wird die vorhandene Unwucht sogar verstärkt.

Des weiteren muß bei einer horizontalen Rotationsachse des Körpers sichergestellt werden, daß die Kugeln mit der Laufbahn rotieren und nicht aufgrund ihrer Schwerkraft im unteren Bereich der Bahn abrollen. Hierzu wird in der EP 0 640 192 B1 vorgeschlagen, die Laufbahn mit einem Stoff zu füllen, der aufgrund der durch ihn ausgeübten Reibkraft die Kugeln zum Anfang der Rotation mitnimmt. Hier hat sich ein viskoses Dämpfungsmittel, insbesondere Öl, bewährt, da Flüssigkeiten mit geringer Viskosität den gewünschten Effekt nicht erbringen und hochviskose Massen oder Sand die Ausrichtung der Kugeln im überkritischen Bereich stören. Solche Dämpfungsmittel führen bei ihrer Entsorgung leider zu erheblichen Problemen. Außerdem ist ihre Viskosität stark temperaturabhängig, so daß ihr Einsatz bei rotierenden Körpern mit schwankender Temperatur, beispielsweise bei Waschmaschinentrommeln in Laugenbehältem mit unterschiedlich temperierter Lauge, nicht möglich ist.

In der EP 0 640 192 B1 wird außerdem vorgeschlagen, in der Laufbahn einen Mitnehmer in Form einer Feder-Masse-Anordnung zu installieren, der bei zunehmender Rotationsgeschwindigkeit durch die auf ihn ausgeübte Zentrifugalkraft in einer Nut in der Laufbahn verschwinden soll. Diese Funktion ist bei der dort beschriebenen Anordnung nicht gewährleistet. Ein weiterer Nachteil besteht darin, daß sich am Anfang der Rotationsbewegung alle Kugeln im Bereich des Mitnehmers befinden und somit selbst eine große Unwucht darstellen.

Bei Kugelauswuchtern besteht außerdem der Nachteil, daß die Gleitreibung der Kugeln untereinander und ihr Zusammenstoßen zu einer hohen Geräuschentwicklung führt. Darüberhinaus ist die Volumenausnutzung der Laufbahn bei der Verwendung von Kugeln nicht optimal.

Aus der nach Artikel 54 EPÜ nicht zum Stand der Technik zählenden Patentanmeldung 19716768.3 ist ein Auswuchter mit kreissegmentförmigen Gewichten und mit einer Fixiereinrichtung bekannt, die aus am Innenrand der Laufbahn angeordneten Rasteinrichtungen besteht. Die Federkonstanten der Lagerungen und die Masse der Gewichte sind derart dimensioniert, daß bei einer vorbestimmten Rotationsgeschwindigkeit die von den Gewichten aufgrund ihrer Zentrifugalkraft in radialer Richtung zurückgelegten Wegstrecken zu deren Freigabe aus den Rasteinrichtungen ausreicht. Ein solches System ist mechanisch sehr aufwendig.

Der Erfindung stellt sich somit das Problem, eine Vorrichtung zum Auswuchten von rotierenden Körpern der eingangs genannten Art zu offenbaren, welche im unterkritischen Drehzahlbereich nicht zu einer Verstärkung der Unwucht führt.

Erfindungsgemäß wird dieses Problem durch eine Vorrichtung zum Auswuchten von rotierenden Körpern mit den im Patentanspruch 1 angegebenen Merkmalen gelöst. Vorteilhafte Ausgestaltungen und Weiterbildungen der Erfindung ergeben sich aus den nachfolgenden Unteransprüchen.

Ein Ausführungsbeispiel der Erfindung wird nachfolgend näher beschrieben. Der erfindungsgemäß ausgebildete Kugelauswuchter besitzt eine aus der nach Artikel 54 EPÜ nicht zum Stand der Technik zählenden deutschen Patentanmeldung 19718321.2-13 bekannte kreisringförmige Laufbahn, in der einzelne Kugeln als Gewichte angeordnet sind. Anstelle von Kugeln können andere Ausgleichskörper verwendet werden. Zwischen den Kugeln liegen doppeltkonische Federelemente in leicht vorgespanntem Zustand, die die Kugeln im statischen oder quasistatischen Zustand auf Distanz halten. Die Federelemente tragen an ihren Enden Reibbeläge (z. B. kalottenförmig), welche die Rollbewegung der Kugeln dämpfen. Die Reibbeläge sind derart dimensioniert, daß sie nicht nur an den Kugeln, sondern auch an der Laufbahn reiben. Hierdurch wird gewährleistet, daß die Kugeln auch bei geringen Drehzahlen von der Laufbahn mitgenommen werden und sich in Umfangsrichtung des auszuwuchtenden Körpers (nicht dargestellt) bewegen. Auf diese Weise werden Rollgeräusche vermieden. Eine zusätzliche Füllung mit einem viskosen Dämpfungsmittel kann die Geräusche noch mehr verringern. Anstelle der Federn können die Kugeln selbst mit einem elastischen Überzug mit rauher Oberfläche versehen sein.

Die Kugeln sind durch die Federn im unterkritischen Drehzahlbereich noch relativ gut über den Umfang der Laufbahn verteilt und bilden selbst keine Unwuchten aus. Bei höheren Schleuderdrehzahlen im Bereich der kritischen Drehzahlen und mit größer werdenden auszugleichenden Unwuchten wirken unwuchtbedingte Kräfte auf die Kugeln, die Federn werden zusammengedrückt. Durch das Zusammenrücken der Kugeln wird dann ein Ausgleichsgewicht gegenüber der Unwucht des Körpers erzeugt und die Auswuchteinrichtung wirkt in bekannter Weise.

## Patentansprüche

1. Vorrichtung zum Auswuchten von rotierenden Körpern, bestehend aus einer mit dem Körper umlaufenden, konzentrisch zu seiner Rotationsachse anordenbaren, kreisringförmigen Laufbahn, innerhalb der mindestens zwei Gewichte angeordnet sind,
**dadurch gekennzeichnet,**
**daß** zwischen den Gewichten elastische Abstandselemente angeordnet sind, deren Größe und deren Verhältnis ihrer Federkonstanten zur Masse der Gewichte derart beschaffen sind, daß die Gewichte bei geringen Drehzahlen des Körpers Positionen einnehmen, in denen die Summe ihrer Zentrifugalkräfte auf die Rotationsachse des Körpers annähernd Null ist und daß die Gewichte oberhalb einer vorbestimmten Drehzahl durch die exzentrizitätsbedingte Radialbeschleunigung näher zusammenrücken.

2. Vorrichtung nach Anspruch 1,
**dadurch gekennzeichnet,**
**daß** die elastischen Mittel als in Umfangsrichtung der Laufbahn wirkende Federn ausgebildet sind.

3. Vorrichtung nach Anspruch 2,
**dadurch gekennzeichnet,**
**daß** die Federn doppelkonisch ausgebildet sind.

4. Vorrichtung nach Anspruch 2 oder 3,
**dadurch gekennzeichnet,**
**daß** an den Enden der Federn Reibelemente angeordnet sind.

5. Vorrichtung nach Anspruch 1,
**dadurch gekennzeichnet,**
**daß** die Gewichte selbst einen elastischen Überzug besitzen.

## Claims

1. Apparatus for balancing rotating bodies, said apparatus comprising a track, which rotates with the body and is circular concentrically relative to the axis of rotation of said body, at least two weights being disposed within said track, **characterised in that** resilient spacer members are disposed between the weights, the size of said members and their resilience constant ratio relative to the mass of the weights being such that, at low speeds of the body, the weights assume positions in which the sum of their centrifugal forces on the axis of rotation of the body is approximately zero, and **in that**, above a predetermined speed, the weights move closer together due to the eccentricity-induced radial acceleration.

2. Apparatus according to claim 1, **characterised in that** the resilient means are in the form of springs which act in the circumferential direction of the track.

3. Apparatus according to claim 2, **characterised in that** the springs are tapered at both ends.

4. Apparatus according to claim 2 or 3, **characterised in that** frictional members are disposed at the ends of the springs.

5. Apparatus according to claim 1, **characterised in that** the weights themselves have a resilient covering.

## Revendications

1. Dispositif pour équilibrer des corps rotatifs, composé d'une voie de roulement en forme d'anneau de cercle pouvant être disposée de manière concentrique par rapport à l'axe de rotation du corps et solidaire en rotation avec ce dernier, dans laquelle sont placés au moins deux poids, **caractérisé en ce qu'**entre les poids sont disposés des éléments d'écartement élastiques dont la taille et dont le rapport entre leurs constantes d'élasticité et la masse des poids sont tels que, lorsque la vitesse de rotation du corps est faible, les poids se mettent dans des positions dans lesquelles la somme de leurs forces centrifuges sur l'axe de rotation du corps est quasi nulle, et **en ce qu'**au-delà d'une vitesse de rotation prédéfinie, les poids se rapprochent davantage du fait de l'accélération radiale due à l'excentricité.

2. Dispositif selon la revendication 1, **caractérisé en ce que** les moyens élastiques sont réalisés sous forme de ressorts agissant en direction du pourtour de la glissière.

3. Dispositif selon la revendication 2, **caractérisé en ce que** les ressorts sont réalisés en forme de double cône.

4. Dispositif selon la revendication 2 ou 3, **caractérisé en ce que** des éléments de friction sont placés aux extrémités des ressorts.

5. Dispositif selon la revendication 1, **caractérisé en ce que** les poids possèdent eux-mêmes un revêtement élastique.
